# EUROPEAN PATENT APPLICATION

(11) **EP 0 972 956 A1**
(43) Date of publication of application: **19.01.2000**
(21) Application number: 99202309.3
(22) Date of filing: 14.07.1999
(51) Int. Cl.: F16B 39/38, F16B 39/34, B21K 1/70

(54) **Self-restraining metal ring nuts, and processes for the production thereof**

(30) Priority: 17.07.1998 IT MI981644
(71) Applicant: Urama S.r.l., 20048 Carate Brianza (Milano) (IT)
(72) Inventor: Perego, Giuseppe, 23893 Cassago Brianza (Lecco) (IT)
(74) Representative: Martegani, Franco

(57) **Abstract**

A self-restraining metal ring nut comprises a ring nut body (11, 111) and a ring (12, 112) which is elastically yielding, the said ring nut body (11, 111) and the said ring (12, 112) being threaded internally in (13, 113) and (17, 117) respectively. According to the invention the said threads (13, 113) and (17, 117) are out-of-phase with respect to each other by an angle (α), and the said ring (12, 122) is intact, i.e. not deformed.

## Description

The present invention relates to a number of interesting improvements made to self-restraining metal ring nuts, used, for example, to mount a bearing on a shaft.

The invention further relates to processes for the production of the said ring nuts.

Persons skilled in the art are familiar with ring nuts in which the restraining torque is provided by a nylon ring of suitable dimensions which is incorporated into the ring nut body.

These types of ring nuts do, however, have the serious drawback of a notable decline in self-restraining performance in the case in which the ring nut operates at high temperatures (in excess of 100°C for example) and particularly in cases in which the high temperature is accompanied by the presence of mineral oils, which has a negative influence on the mechanical properties of the nylon.

To overcome the above-mentioned drawback exhibited by the ring nuts provided with a self-restraining nylon ring, two different solutions have substantially been proposed in the past.

A first solution is based on the deformation of the thread of the ring nut.

A second solution consists of replacing the nylon ring with an unthreaded steel ring.

Ring nuts with deformed thread have the disadvantage of being relatively expensive in that, generally, the thread deformation operation must be preceded by a laborious milling.

In contrast, ring nuts provided with unthreaded metal rings have the drawback that on occasions the said ring is irreparably damaged at the time of assembly, as the thread of the shaft does not manage to open it up in suitable manner. A ring nut of this type is described in GB-2.088.985 for example.

A further serious drawback of the two types of self-restraining ring nuts described above is represented by the characteristic of the restraining torque as a function of the number of screwings.

In fact both the ring nuts with deformed thread and those with an unthreaded steel ring exhibit a relatively high decline between the first and the fifth unscrewing, also causing a certain damage to the thread of the shaft.

The general object of the present invention is to overcome the above-mentioned disadvantages of the prior art and, in view of this object, it has been conceived to produce a self-restraining metal ring nut having the properties set out in the accompanying main claim and sub-claims.

The structural and functional features of the invention and the advantages thereof compared with the prior art will be more clearly understood from a study of the description which follows, with reference to the accompanying drawings which show two practical embodiments of the said invention, as follows:
- Fig. 1 is a plan view showing a first practical embodiment of a self-restraining metal ring nut incorporating the principles of the invention;
- Fig. 2 is a sectional view through II-II of Fig. 1;
- Fig. 3 is an enlarged detail of the ring nut of Figs. 1, 2 in non-operational position;
- Fig. 4 is an enlarged detail like that of Fig. 3 but showing the ring nut in operational position by means of which a threaded shaft acting on the metal braking ring has been screwed on;
- Fig. 5 is a plan view showing a second practical embodiment of a self-restraining metal ring nut incorporating the principles of the invention; and
- Fig. 6 is a sectional view through VI-VI of Fig. 5.

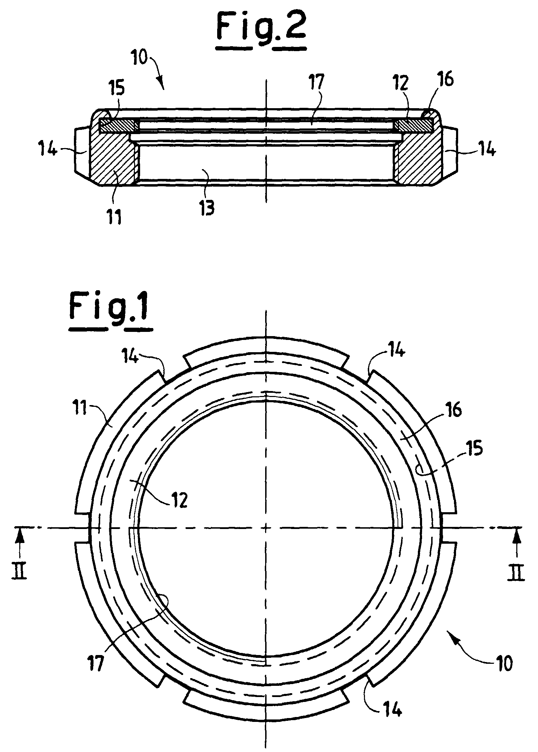

With reference to Figs. 1-4 of the drawings, the self-restraining metal ring nut according to the invention - in a possible embodiment thereof - is denoted in its entirety by 10 and is structurally formed by an annular body 11 comprising a metal ring 12 which is elastically yielding.

The ring nut body 11 is threaded internally, as in 13, and externally it has a series of interspaced grooves 14 for engagement of a suitable tool by means of which the ring nut is screwed onto a threaded bolt or shaft.

The ring 12 is housed inside a seat 15 of the ring nut body 11 and is fixed there by means of seam folding, i.e. by means of an operation of folding an annular edge 16 of the ring nut body 11 over it.

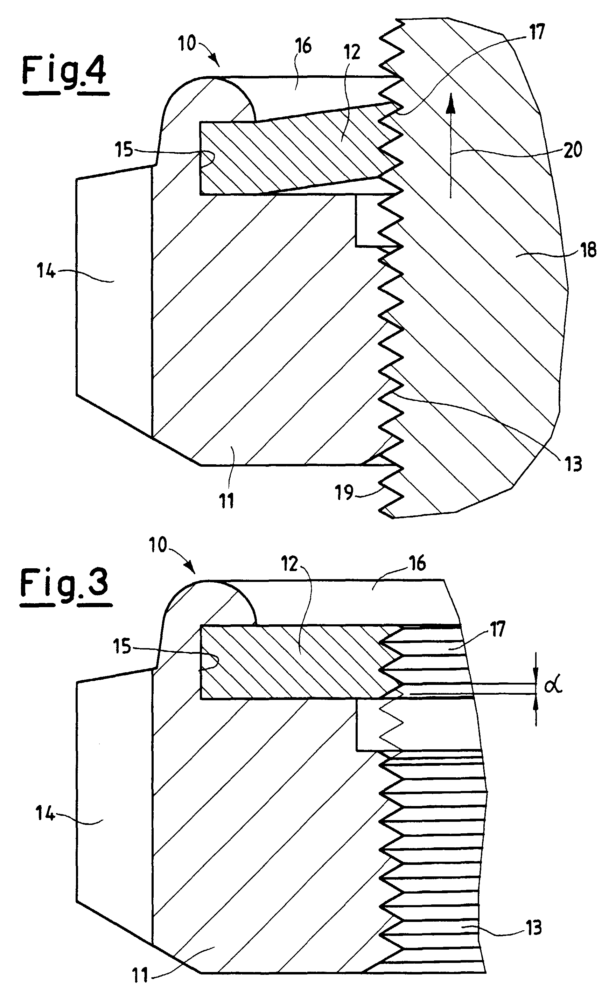

The metal ring 12 is threaded internally as in 17 and, according to the present invention, the thread 17 of the ring 12 is out-of-phase with respect to the thread 13 of the ring nut body 11 by a certain angle α (Fig. 3) which is variable as a function of the braking torque it is desired to obtain.

In use, as clearly shown in Figs. 3, 4 of the drawings, because of the phase-displacement existing between the threads 13, 17 of the ring nut body 11 and the ring 12 respectively, at the time of screwing the ring nut 10 onto a threaded shaft 18 as in 19 the ring 12 is obliged to move longitudinally in the direction of the arrow 20, from the position of Fig. 3 to the position of Fig. 4.

A movement of this kind, which the ring 12 performs in the elastic range, generates an axial force which in its turn generates, by friction, a radial force and hence a twisting moment which opposes the advance of the shaft 18.

The novelty and originality of the present invention lie in the fact that the phase-displacement between the two threads 13, 17 is not generated by means of an axial deformation of the ring 12 (operation which exhibits extremely high variables) but is created instead - on a numerically controlled machine tool - first by producing the thread 13 of the ring nut body 11 and then shifting the tool by a determined quantity and producing the thread 17 in the ring 12 (not deformed), thread 17 which is thus out-of-phase with respect to 13.

The phase-displacement between the two threads 13, 17 may, of course, also be produced by producing the said threads by means of two different tools.

The ring nut shown in Figs. 1-4 may be produced for example by means of a process comprising the following operational phases:
a) forging or optionally turning a semi-finished blank from a bar;
b) turning the ring nut body 11 without thread;
c) inserting the ring 12 and seam-folding the same in the ring nut body 11; and
d) producing in succession the out-of-phase threads 13, 17 on the ring nut body 11 and the ring 12 respectively, using a same tool or two different tools.

It should, however, be noted that the thread 17 on the ring 12 could also be produced before the said ring 12 is assembled on the ring nut body 11; in this case the ring 12 is assembled on the ring nut body 11 taking care to phase-displace - by using suitable references provided on both the ring 12 and on the ring nut body 11 - the threads 13, 17 by the desired quantity α.

In addition, the first two phases a), b) could be combined into a single phase by means of which the ring nut body 11 with no thread is produced.

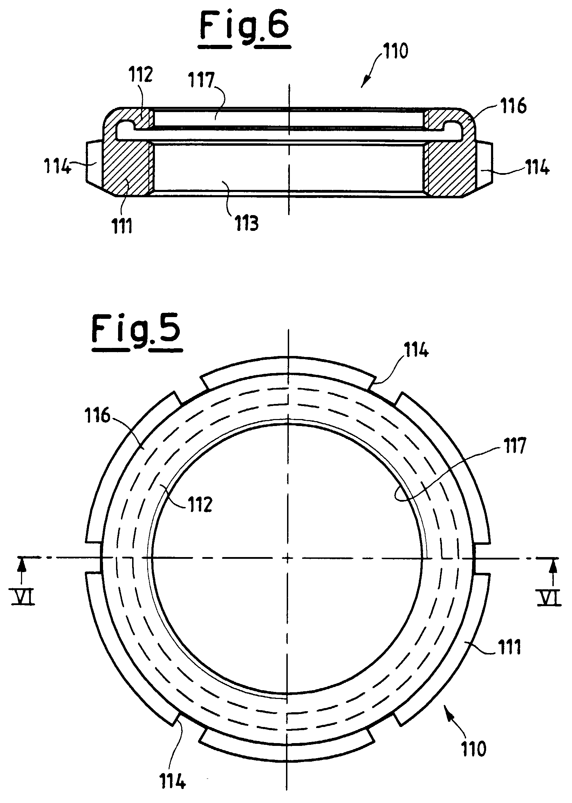

According to a further possible embodiment of the invention, shown in Figs. 5, 6, the ring 12 may also be produced integrally in the ring nut body 11.

In the embodiment of Figs. 5, 6 the components which are identical and/or equivalent to those shown in Figs. 1-4 bear the same reference numerals plus 100.

In this way, the ring nut 110 of Figs. 5, 6, is produced with a ring nut body 111 from an edge 116 from which is obtained integrally a ring which is yielding in elastic manner 112, which is suitably interspaced from the said ring nut body 111, as shown in Fig. 6 of the drawings.

The ring nut shown in Figs. 5, 6 may be obtained by means of a process comprising the following operational phases:
a) forging or optionally turning a semi-finished blank from a bar;
b) turning the ring nut body 111 without thread;
c) producing the elastically yielding ring 112 from the ring nut body 111 by means of folding; and
d) producing in succession the out-of-phase threads 113, 117 on the ring nut body 111 and the ring 112 respectively, using a same tool or two different tools.

In this case also, as stated above, the phases a), b) could be combined into a single phase.

The objects mentioned in the introduction to the description are achieved in this way.

The protective scope of the invention is defined by the claims which follow.

## Claims

1. Self-restraining metal ring nut of the type comprising a ring nut body (11, 111), and a ring (12, 112) which is elastically yielding, the said ring nut body (11, 111) and the said ring (12, 112) being threaded internally in (13, 113) and (17, 117) respectively, characterized in that the said threads (13, 113) and (17, 117) are out-of-phase with respect to each other by an angle (α), and in that the said ring (12, 112) is intact, i.e. not deformed.

2. Ring nut according to Claim 1, characterized in that the said ring (12) is a ring produced in the ring nut body (11), being housed in a seat (15) and fixed there by means of folding of an edge (16).

3. Ring nut according to Claim 1, characterized in that the said ring (112) is a ring obtained integrally from the ring nut body (111).

4. Ring nut according to Claim 1, characterized in that the said ring (112) is a ring obtained integrally from a folded edge (116) of the ring nut body (111).

5. Process for obtaining a self-restraining metal ring nut according to Claim 1, characterized in that it comprises the phases of:
a) producing the ring nut body (11) without thread;
b) inserting the ring (12) and seam-folding the same in the ring nut body (11); and
c) producing in succession out-of-phase threads (13, 17) on the ring nut body (11) and the ring (12) respectively, using a same tool.

6. Process for obtaining a self-restraining metal ring nut according to Claim 1, characterized in that it comprises the phases of:
a) forging or optionally turning a semi-finished blank from a bar;
b) turning the ring nut body (11) without thread;
c) inserting the ring (12) and seam-folding the same in the ring nut body (11); and
d) producing in succession the out-of-phase threads (13, 17) on the ring nut body (11) and the ring (12) respectively, using a same tool.

7. Process according to Claim 6, characterized in that the said out-of-phase threads (13, 17) are produced in succession using two different tools.

8. Process according to Claim 6, characterized in that the said out-of-phase threads (13, 17) are produced separately on the ring nut body (11) and on the ring (12), which ring (12) is mounted on the ring nut body (11) taking care to phase-displace the said threads (13, 17) by an angle (α).

9. Process according to Claim 1, characterized in that the said out-of-phase threads (113, 117) are produced in succession using a same tool.

10. Process for obtaining a self-restraining metal ring nut according to Claim 3, characterized in that it comprises the phases of:
a) producing the ring nut body (111) without thread;
b) producing the elastically yielding ring (112) integrally from the ring nut body (111); and
c) producing in succession the out-of-phase threads (113, 117) on the ring nut body (111) and the ring (112) respectively, using a same tool.

11. Process for obtaining a self-restraining metal ring nut according to Claim 3, characterized in that it comprises the phases of:
a) forging or optionally turning a semi-finished blank from a bar;
b) turning the ring nut body (111) without thread;
c) producing the elastically yielding ring (112) integrally from the ring nut body (111); and
d) producing in succession the out-of-phase threads (113, 117) on the ring nut body (111) and the ring (112) respectively, using a same tool.

12. Process according to Claim 11, characterized in that the said elastically yielding ring (112) is produced by means of folding a section (116) of the ring nut body (111).

13. Process according to Claim 11, characterized in that the said out-of-phase threads (113, 117) are produced in succession using two different tools.
